# EUROPEAN PATENT SPECIFICATION

(11) **EP 3 479 718 B1**
(45) Date of publication and mention of the grant of the patent: **30.06.2021**
(21) Application number: 17819395.9
(22) Date of filing: 26.05.2017
(51) Int. Cl.: A43B 17/18, A43D 35/00, A43B 1/02, A43B 13/02, B29D 35/12

(54) **FOOTWEAR**
SCHUHWERK
CHAUSSURE

(30) Priority: 01.07.2016 ES 201630862 U
(43) Date of publication of application: 08.05.2019
(73) Proprietor: Polo Guillén, Manuel, 30400 Caravaca de la Cruz (Murcia) (ES)
(72) Inventor: Polo Guillén, Manuel, 30400 Caravaca de la Cruz (Murcia) (ES)
(74) Representative: Ungria López, Javier
(86) International application number: PCT/ES2017/070359
(87) International publication number: WO 2018/002395

(56) References cited:
- EP-A1- 0 670 121
- EP-A1- 1 425 981
- EP-A1- 1 600 070
- WO-A1-85/04786
- CN-A- 104 997 236
- DE-U1- 20 018 180
- JP-A- H1 075 801
- KR-U- 20120 007 241
- US-A- 5 896 677
- US-A1- 2007 102 843

## Description

### Object of the invention

The present invention, as expressed in the title of this specification, relates to a mould and a method for the manufacture of footwear; wherein the footwear comprises at least a sole, an upper joined to the sole and an insole positioned in correspondence with an upper face of the sole; wherein the foot of the user rests on said insole. Based on this premise, the purpose of the invention is to increase the comfort of the user when he or she uses the footwear of the invention. For this purpose, the structure for coupling the insole to the sole is a male-female coupling that keeps both elements connected without being a solid join. Preferably, the invention can be applied to footwear including soles made with textile fibres.

### Technical problem to be solved and background of the invention

Different types of footwear are currently known, all of which comprise at least a sole and an upper joined to said sole.

Other footwear further includes an insole arranged in correspondence with an upper face of the sole on which the foot of the user rests. In this type of footwear, when the sole is made with materials of textile fibres (especially jute, raffia), whether they are natural or not, the insole is solidly joined to the sole by means of an adhesive; and to prevent it from detaching easily, the joining is reinforced by means of peripheral sewing around the entire contour of the upper face of the sole.

This fixed joining of the insole to the sole has the drawback where as time passes the peripheral sewing can break. This footwear with the described sewing system between sole and insole is a footwear with less comfort and less flexibility in the sole and insole assembly; it also has the drawback that the peripheral sewing creates chaffing on the foot of the user which can end up creating wounds.

On the other hand, in international application PCT ES2017/070359 referring to the footwear of the invention, several relevant documents are mentioned (JP 10-75801 A, EP 1600070 A1 and US 5896677 A) in the International Search Report (ISR) which comprise, among the elements thereof, a sole of plastic material or similar that is obtained by moulding or injection, and an insole that fits in a recessed area positioned in an upper surface of the sole; wherein said recessed area is delimited by a peripheral partition that forms part of the sole; such that in none of the cases is the material of the sole jute or other natural materials such as those of the invention.

It is worth noting that it is not currently possible to obtain a sole structure for footwear in a single complete piece and with a recessed area delimited by a peripheral partition with jute material or other natural materials; all of this is due to the difficulty in configuring the recessed area and the peripheral partition in the upper face of the sole of natural material in a single piece.

It is known document WO8504786 which describes an article of footwear including a nest of unobstructed space within the article of footwear and not separated from the area intended to receive a wearer's foot. It further includes a wall around the periphery of a sole of said footwear, thereby defining said nest. The nest is adapted to releasably hold a therapeutic or other inner sole. Furthermore, document US 2007/102843 discloses a mould for manufacturing a sole of footwear according to the preamble of claim 1.

### Description of the invention

With the aim of reaching the objectives and preventing the drawbacks mentioned in the preceding sections, the invention proposes a mould and a method for the manufacture of a sole of footwear, wherein the footwear comprises at least a sole of textile fibre, an upper joined to the sole and an insole positioned in correspondence with an upper face of the sole, according to claims 1 and 2 respectively.

The upper face of the sole includes a recessed area delimited by a peripheral partition forming part of the sole, the insole on which the foot of the user rests fitting inside the recessed area.

The sole described along with the insole increase the comfort of the user when he or she uses the footwear of the invention. For this purpose, the structure for coupling the insole to the sole is a male-female coupling that keeps both elements connected without being a solid join.

The sole is obtained from a mould comprising a first portion including at least a male element, and a second portion including at least a female element; where in a closed position of the mould, the male element is configured to fit inside the female element to form the sole inside the female element.

The male element comprises a front surface and a stepped peripheral recess that delimits a central portion including the front surface; wherein the front surface and the peripheral recess are configured to form the recessed area and the peripheral partition of the sole.

The method for manufacturing the sole of footwear by means of moulding comprises the following steps:
- Fit an initial body of textile fibre configured to obtain the sole inside the female element of the mould.
- Close the mould until the male element fits inside the female element; where in a final phase of closing the mould, the front surface and the peripheral recess of the male element press and push against an initial surface of the initial body until forming the recessed area and the peripheral partition that form part of the manufactured sole.

It is worth noting that in the conventional soles of textile material such as jute, which also include an insole for offering greater user comfort, said insole is sewn to the sole as mentioned previously, without the sole including the structure feature in the upper face thereof formed by the recessed area and the peripheral partition that delimits said recessed areas as occurs in the sole of the invention.

In this sense, it is noted that the invention resolves an important problem, such as the difficulty in obtaining the structure feature in the upper face of the soles of textile material such as jute and other natural materials.

It is also noted that the sole of footwear is manufactured by moulding of the initial body of jute or natural fibre already made, such that plastic or rubber injection processes are not used as occurs with conventional footwear soles.

This initial body is smooth and it is where the peripheral partition forming the recessed area in question is formed by pressing; therefore, comparing this sole of the footwear to the soles of the documents cited in the section on the background, it is worth noting that we start with products manufactured from completely different materials until the advantages of footwear with a sole manufactured from plastic or rubber are obtained in the invention, as well as the additional advantages of this sole of the footwear that is manufactured from completely natural and artisan materials.

For the purpose of helping to make this specification more readily understandable, a set of drawings constituting an integral part of the same has been included below, wherein by way of illustration and not limitation the object of the invention has been represented.

### Brief description of the figures

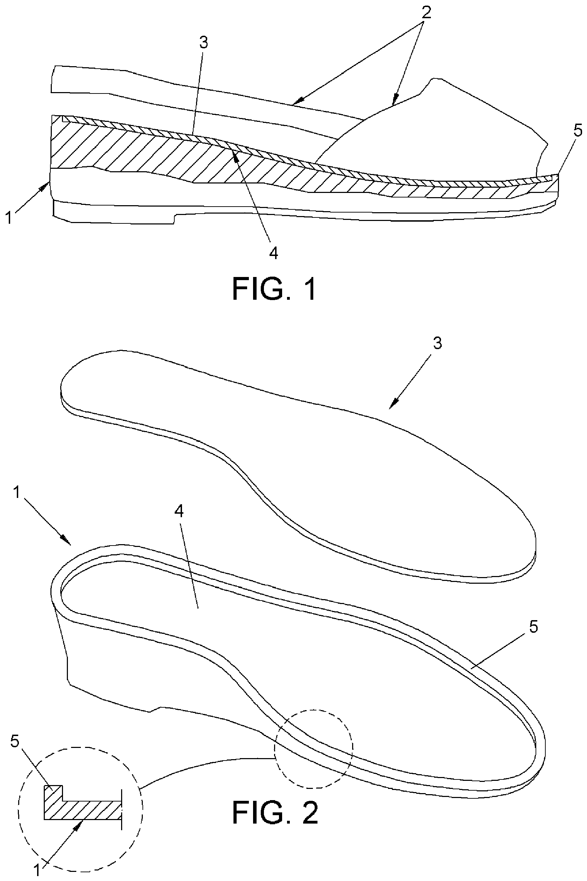

**Figure 1****.-** Shows a front view of the footwear with a partial cross section. It basically comprises a sole, an upper and an insole. The object of the invention is a mould and a method for manufacturing the sole.
**Figure 2****.-** Shows an exploded perspective view of an assembly formed by the sole and insole.

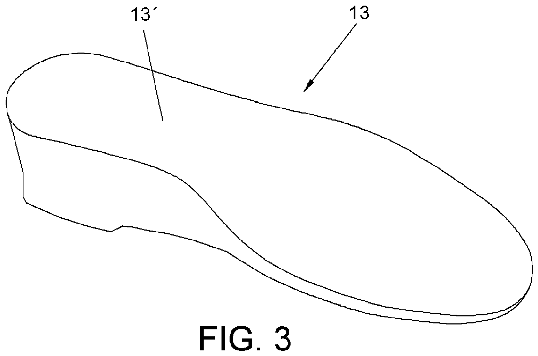

**Figure 3****.-** Shows a perspective view of an initial body, from which the sole of the footwear is obtained.
**Figure 4****.-** Shows a perspective view of an open mould, from which the sole of the footwear is obtained.
**Figure 5****.-** Shows a cross-sectional view of the closed mould, wherein the sole of the footwear is positioned inside said mould.

### Description of an exemplary embodiment of the invention

Following the numbering adopted in the figures, the footwear comprises at least a sole 1 of textile fibre made up of a complete body, an upper 2 joined to the sole 1 and an insole 3 positioned in correspondence with an upper face of the sole 1; wherein the foot of the user rests on said insole 3.

The upper face of the sole 1 includes a recessed area 4 delimited by a peripheral partition 5 forming part of the sole 1, where said recessed area is intended to house therein the insole 3 on which the foot of the user rests when he or she uses the footwear of the invention.

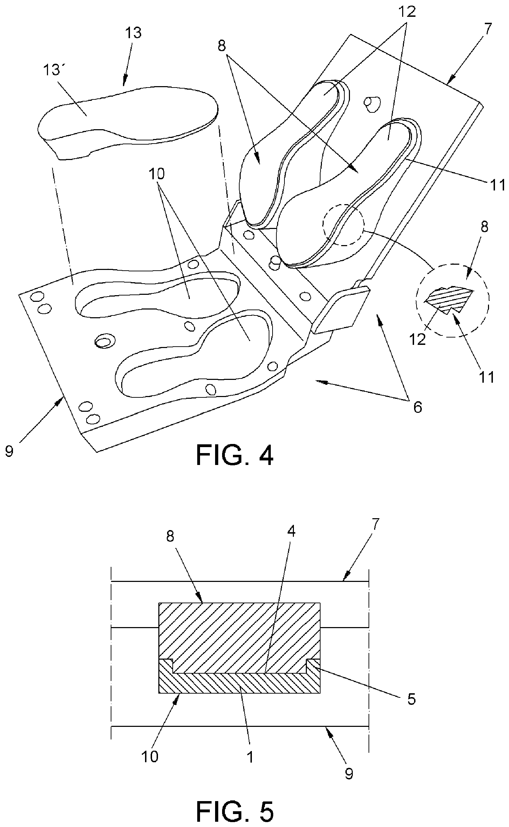

The sole 1 is obtained from a mould 6 comprising a first portion 7 including at least a male element 8, and a second portion 9 including at least a female element 10; where in the closed position of the mould 6 as shown in Figure 4, the male element 8 fits inside the female element 10 to form the sole 1.

The male element (8) comprises a front surface 12 and a stepped peripheral recess 11 that delimits a central portion that includes the front surface 12.

In an initial phase of the manufacturing of the sole 1, the mould 6 being open, an initial body 13 of textile fibre is inserted inside the female element 10 to obtain the sole 1 without the recessed area 4 or the peripheral partition 5 being formed in said initial body 13.

In a subsequent phase, the mould 6 is closed, such that a front surface 12 of the male element 8 presses against an initial surface 13' of the initial body 13 corresponding with the upper face of the sole 1, to form the recessed area 4 and the partition 5. For this purpose, said front surface 12 along with the peripheral recess 11 form the recessed area 4 and the peripheral recess 11 of the sole 1 obtained with the mould 6.

In a subsequent phase, the mould 6 is closed, such that a front surface 12 of the male element 8 presses against an initial surface 13' of the initial body 13 corresponding with the upper face of the sole 1 to form the recessed area 4 and partition 5. For this purpose, said front surface 12 along with the peripheral recess 11 form the recessed area 4 and the peripheral recess 11 of the sole 1 obtained with the mould 6.

Thus, to form the recessed area 4 and the partition 5 in the sole 1 of the footwear, the initial body 13 of textile fibre is inserted (without forming the recessed area 4 and peripheral partition 5) inside the female element 10 of the mould 6 and said mould 6 is closed, making the assembly of the front surface 12 and the peripheral recess 11, the male element 8 presses against the upper face of the sole the initial surface 13' of the initial body 13 to form said recessed area 4 and said partition 5 to obtain the sole 1 of the footwear. Inside the recessed area 4 of the sole 1 obtained in the mould 6, the insole 3 on which the foot of the user rests is embedded with pressure.

All of this provides the obtained sole 1 and the footwear in general with greater comfort, eliminating the peripheral sewing that the conventional soles of textile fibre include, only using the sewing to join other parts of the footwear.

The new structure described for coupling the insole 3 to the sole 1 considerably increases the flexibility of the sole, improves the finishing of the footwear, cleaner in appearance due precisely to eliminating the peripheral sewing that is conventionally used to join the insole to the sole.

It is worth noting that initially the system described for achieving the recessed area 4 in the upper face of the sole is not applicable to other types of materials used in the footwear, such that this system is preferably used when there are natural or non-natural fibres (jute, linen, raffia, cotton, etc.).

## Claims

1. A mould for manufacturing a sole of footwear of the type comprising at least a sole (1) of textile fibre, an upper (2) joined to the sole (1) and an insole (3) positioned in correspondence with an upper face of the sole (1) and in which the upper face of the sole (1) includes a recessed area (4) delimited by a peripheral partition (5) forming part of the sole (1) and the insole (3) is fitted inside the recessed area (4); the mould comprising a first portion (7) including at least a male element (8), and a second portion (9) including at least a female element (10); where in a closed position of the mould (6), the male element (8) is configured to fit inside the female element (10) to form the sole (1) inside the female element (10), wherein the male element (8) comprises a front surface (12), **characterized in that** the male element (8) comprises a stepped peripheral recess (11) that delimits a central portion that includes that front surface (12); wherein the front surface (12) and the peripheral recess (11) are configured to form the recessed area (4) and the peripheral partition (5) of the sole (1).

2. A method for manufacturing a sole of footwear by means of the mould claim 1, **characterised in that** it comprises the following steps:
- fit an initial body (13) of textile fibre configured to obtain the sole (1) inside the female element (10) of the mould (6);
- close the mould (6) until the male element (8) fits inside the female element (10); where in a final phase of closing the mould (6), the front surface (12) and the peripheral recess (11) of the male element (8) press and push against an initial surface (13') of the initial body (13) until forming the recessed area (4) and the peripheral partition (5) that form part of the manufactured sole (1).

## Patentansprüche

1. Form zum Herstellen einer Sohle von Fußbekleidung des Typs, der wenigstens eine Sohle (1) aus Textilfaser, einen mit der Sohle (1) verbundenen Schaft (2) sowie eine Brandsohle (3) umfasst, die in Entsprechung zur einer oberen Fläche der Sohle (1) positioniert ist, und bei der die obere Fläche der Sohle (1) einen vertieften Bereich (4) umfasst, der durch eine Umfangs-Trennwand (5) begrenzt wird, die einen Teil der Sohle (1) bildet, und die Brandsohle (3) in den vertieften Bereich (4) eingepasst ist, wobei die Form einen ersten Abschnitt (7), der wenigstens ein Patrizen-Element (8) enthält, sowie einen zweiten Abschnitt (9) umfasst, der wenigstens ein Matrizen-Element (10) enthält, und das Patrizen-Element (8) so ausgeführt ist, dass es in einer geschlossenen Position der Form (6) in das Matrizen-Element (10) hinein passt, um die Sohle (1) im Inneren des Matrizen-Elementes (10) auszubilden, wobei
das Patrizen-Element (8) eine vordere Fläche (12) umfasst, **dadurch gekennzeichnet, dass** das Patrizen-Element (8) eine abgestufte Umfangs-Vertiefung (11) umfasst, die einen Mittelabschnitt begrenzt, der die vordere Fläche (12) einschließt, wobei die vordere Fläche (12) und die Umfangs-Vertiefung (11) so ausgebildet sind, dass sie den vertieften Bereich (4) und die Umfangs-Trennwand (5) der Sohle (1) bilden.

2. Verfahren zum Herstellen einer Sohle von Fußbekleidung mittels der Form nach Anspruch 1, **dadurch gekennzeichnet, dass** es die folgenden Schritte umfasst:
- Einpassen eines Ausgangskörpers (13) aus Textilfaser, der zum Fertigen der Sohle (1) ausgeführt ist, in das Innere des Matrizen-Elementes (10) der Form (6);
- Schließen der Form (6), bis das Patrizen-Element (8) in das Innere des Matrizen-Elementes (10) passt, wobei in einer Endphase des Schließens der Form (6) die vordere Fläche (12) und die Umfangs-Vertiefung (11) des Patrizen-Elementes (8) an eine Ausgangsfläche (13') des Ausgangskörpers (13) drücken und schieben, bis der vertiefte Bereich (4) und die Umfangs-Trennwand (5) ausbilden, die einen Teil der hergestellten Sohle (1) bilden.

## Revendications

1. Moule pour fabriquer une semelle de chaussure du type comprenant au moins une semelle (1) de fibre textile, une empeigne (2) assemblée à la semelle (1) et une semelle intérieure (3) positionnée en correspondance avec une face supérieure de la semelle (1) et dans laquelle la face supérieure de la semelle (1) comprend une zone enfoncée (4) délimitée par une séparation périphérique (5) faisant partie de la semelle (1) et la semelle intérieure (3) est montée à l'intérieur de la zone enfoncée (4) ; le moule comprenant une première partie (7) comprenant au moins un élément mâle (8) et une seconde partie (9) comprenant au moins un élément femelle (10) ; où dans une position fermée du moule (6), l'élément mâle (8) est configuré pour se monter à l'intérieur de l'élément femelle (10) afin de former la semelle (1) à l'intérieur de l'élément femelle (10), dans lequel :
l'élément mâle (8) comprend une surface avant (12), **caractérisé en ce que** l'élément mâle (8) comprend un évidement périphérique étagé (11) qui délimite une partie centrale qui comprend cette surface avant (12) ; dans lequel la surface avant (12) et l'évidement périphérique (11) sont configurés afin de former la zone enfoncée (4) et la séparation périphérique (5) de la semelle (1).

2. Procédé pour fabriquer une semelle de chaussure au moyen du moule selon la revendication 1, **caractérisé en ce qu'**il comprend les étapes suivantes :
monter un corps initial (13) de fibre textile configuré pour obtenir la semelle (1) à l'intérieur de l'élément femelle (10) du moule (6) ;
fermer le moule (6) jusqu'à ce que l'élément mâle (8) se monte à l'intérieur de l'élément femelle (10) ; où dans une phase finale de fermeture du moule (6), la surface avant (12) et l'évidement périphérique (11) de l'élément mâle (8) compriment et poussent contre une surface initiale (13') du corps initial (13) jusqu'à former la zone enfoncée (4) et la séparation périphérique (5) qui font partie de la semelle (1) fabriquée.
